# EUROPEAN PATENT APPLICATION

(11) **EP 1 965 149 A1**
(43) Date of publication of application: **03.09.2008**
(21) Application number: 06841748.4
(22) Date of filing: 19.12.2006
(51) Int. Cl.: F24J 2/04

(54) **SOLAR ENERGY COLLECTION DEVICE FOR TILE ROOFS AND METHOD FOR MOUNTING SAME**

(30) Priority: 21.12.2005 ES 200503144; 11.12.2006 ES 200603133
(71) Applicant: Gianasso, Roland, 03110 Muchamiel (ES); Ramirez Carreras, Carlos, 03110 Muchamiel (ES)
(72) Inventor: Gianasso, Roland, 03110 Muchamiel (ES); Ramirez Carreras, Carlos, 03110 Muchamiel (ES)
(74) Representative: SUGRANES - VERDONCES - FERREGÜELA
(86) International application number: PCT/ES2006/000696
(87) International publication number: WO 2007/071805

(57) **Abstract**

The device part of the embodiment over the tiles (14) with wide openings(15) which mainly involves, openings (15) in which are houses both irregular bodies (1-13), of transparent glass, hermetically closed and vacuum filled, which establish surface continuity through the upper face with the rest of the tile (14) and in whose interior are established parabolic cylinder reflectors (2-3) which conduct solar radiation to a concentration funnel (5) which defines a semi-cylindrical channel and adapting to the heat transfer tube (6), which rests over a support cradle (7) which in turn is pressed against aforementioned tube (6) by a bellows lifting device (16), also keeping the support cradle (7) and irregular bodies (1) fixed using anchor elements (8). Thus simple mounting of the collection devices is achieved by a simple pressure coupling system, achieving close contact with the heat transfer tubes which remain hidden and protected below the tiles.

## Description

### PURPOSE OF THE INVENTION

The present invention relates to a solar energy collection device, which makes a beneficial change to the tiles of an existing roof or by making a roof that comprises them, either curved or mixed, in such a way that said tiles, besides fulfilling their classic function as covering elements against the effects of the wind and weather, particularly against rainwater, act as solar energy collection devices to heat a thermal transmission fluid.

The purpose of the invention is to achieve a high performance energy installation that does not alter the aesthetic configuration of the roof on which it is incorporated, both in relation to the actual means of collection and particularly the means of energy transmission.

The invention also concerns the particularly suitable mounting procedure of the different elements that take part in the installation of this heat transfer system under the tiles, completely protecting this latter.

The invention, therefore, is situated in the industrial setting of manufacturing devices and equipment for solar energy collection at a domestic level or similar and, as a result, associated to the mechanical or artisan tile manufacture industry.

### BACKGROUND OF THE INVENTION

As is currently known and to collect solar energy at a domestic level, solar panels placed on sloping roofs are generally used. These panels incorporate a metal frame by which they are fixed to the roof, usually raised, with visible and uncovered liquid circulation tubes, sometimes even including the hot water cylinder, therefore it is necessary to make holes in the tiles and the rest of the roof to be able to connect the aforementioned tubing with the interior circuit.

This brings with it very considerable damage to the aesthetics of the architectural assembly over which the thermal solar panels are mounted, particularly when, as often happens, the surface and the panel colour and its visible accessories have absolutely nothing to do with the characteristics of the existing roof, particularly when it is a roof based on curved or mixed tiles, so common particularly in areas where solar radiation is abundant as well those situated below latitude 50º north.

To this aesthetic problem also has to be added the problems of corrosion that occur in the elements of these types of panels in the open air when the installations are situated near a marine environment.

### DESCRIPTION OF THE INVENTION

The invention fully satisfactorily resolves the previously explained problem, and from this it converts a traditional roof composed of curved or mixed conventional tiles into a similar and aesthetic configured surface, but which incorporates a device composed of different solar energy collection modules.

Thus, the device comprises the following basic elements:
- A four sided irregular body with a parabolic cylinder able to be attached to the vacuum filled receiver tiles in their interior space.
- A means of returning and concentrating the solar radiation.
- A heat exchanger adapted to the lower length of the energy collection device.
- A heat transfer fluid channelling tube that allows it to be installed without connection components below the tiles.
- A support cradle which facilitates the hermetic anchor of the heat exchanger to the heat transfer tube achieving optimum thermal use.

Additionally and depending on the type of roof that it is intended to adapt, it will alternatively contain one of the following elements:
- A parabolic cylinder reflector assembly in a lower position and a parabolic cylinder assembly in an upper position that returns the radiation in a cone concentrator.
- Or a parabolic cylinder reflector assembly in a lower position and an absorbent concentrator in the shape of an corrugated fin, together with the parabolic cylinder in an upper position.

For this each tile is fitted with an opening or window in its curved sector in which a collection device itself is attached, comprising a body which establishes upper surface continuity with the external face of the tile and which occupies the centre of the same. Inside the aforementioned transparent body two parabolic reflectors in symmetrical positions are situated on the lower end of its wall. Opposite these and centrally located on the focal line also includes a radiation return parabolic cylinder reflector over some concentrator parabolic cylinder laminates connected to the heat exchanger that hermetically receives the heat transfer tube which is situated below all the tiles of an alignment.

A support cradle of the same length as the body of each device is positioned below the aforementioned tube, with the purpose of positioning and hermetically sealing the aforementioned tube. This cradle positioned over the bellows lifting device allows in the first place to fasten the transparent body by means of spring clips attached to the aforementioned body and which are built in to the side plug holes of the cradle and which in a second advantageous function, ensure the hermetic and heat sealing of the heat transfer tube to the heat exchanger.

The bellows lifting device provided with its positioning slots or the means (special tool) of aligning and freeing the leaf spring, in its variation they allow, by downward manual pressure applied on the irregular transparent body, this to be connected to the support cradle hermetically sealing the heat transfer tube. This installation procedure similarly offers the greater advantage of achieving a solid assembly between the three elements that make up the tile, the irregular transparent body and the heat transfer tube, being able in this way to adequately support the thermal expansions of the roof in its assembly.

The irregular transparent body is provided with a connexion for a heat sensor which transmits the recorded temperatures to the device that generally controls the heat exchanger and the hot water distribution system.

In accordance with an alternative embodiment of the invention, the irregular and closed body instead of being integrated in the tile is independent of this latter, similarly poking through the opening of the aforementioned tile, which makes it unnecessary to make a perfect adjustment over this latter, having been anticipated that to maintain the water tightness of the roof the tile opening is closed with a transparent dome, physically independent of aforementioned closed body.

It has also been anticipated that the tube for transporting the heat transfer fluid passes through the inside part of the aforementioned hermetic body, improving its arrangement.

In this alternative embodiment, from the ends of the closed body emerge pairs of support tracks for fixing the elastic clips through which the fixing of the body with the interior components to the support cradle is carried out and the fixing to the wooden battens or concrete base over which the tile sits.

It is also possible to substitute the aforementioned reflectors, for a shaped lamina covered with a selective coating for absorbing heat, soldered to the corresponding heat exchanger, in which the heat transfer tube is built in lengthwise, enclosed within the transfer chamber, and aligned and hermetically sealed at its ends with the cradle.

Lastly, it has also been foreseen that the closed body rests on the corresponding cradle supported by a sheet adapted to its lower cylindrical half, based on a reflecting and isolating compound to return the rays to the absorbent sheets and in fact to return and retain the heat for its maximum use.

### DESCRIPTION OF THE FIGURES

To complete the description that is now being made and with the purpose of helping to better understand the characteristics of the invention, in accordance with a preferred practical embodiment example of the same, is attached as an integral part of said description, a set of figures in which for illustrative purposes but not limited to it, the following has been represented:
Figure 1. - Shows a cross-sectional detail of the body or solar energy collection module destined to be integrated into a tile, which takes part in the device of the invention.
Figure 2.- Shows, also according to a cross-sectional schematic representation, a pair of mixed tiles, duly fastened together, to one of which appears opposite the corresponding body or solar collection module, while the other appears duly mounted over the aforementioned module.
Figure 3. - Shows a detail in side elevation and in a lengthwise section of the mounted assembly represented in Figure 1.
Figure 4. - Shows a side elevation view and in a lengthwise section of an assembly similar to that in Figure 2, in which two tiles appear duly fastened together lengthwise, to the body or collection model itself fastened to the same, and the other to the aforementioned module in an opposite position.
Figures 5, 6 and 7. - Show representations similar to those of Figures 1, 2 and 3, but in which the solar energy collection device appears mounted on curved tiles, instead of over mixed tiles with the support cradle adapted to this type of tile and its special means of fixing.
Figure 8, - Shows a schematic representation plan view and cross-section of the special tool or the means that are an integral part of the procedure for fixing the irregular transparent body to the support cradle.
Figure 9. - Shows a schematic detail in plan view of several tiles positioned with reference to Figure 2.
Figure 10.- Shows, a representation similar to that of Figure 9 but with the tiles as shown in Figure 6.
Figure 11.- Shows, according to a representation similar to that of Figure 1, a cross-sectional detail and in partial blow-up of the device according to an alternative embodiment foreseen for the same.
Figure 12. - Shows a perspective blow-up view of the glass tube that passes through the collector with the heat exchanger and the support cradle and alignment, of the previous figure.
Figure 13. - Shows the assembly of Figure 11 duly mounted and fastened to a tile.
Figure 14. - Shows a side elevation view of the assembly represented in Figure 11.
Figure 15. - Shows another side elevation view of the assembly of Figure 11, mounted in position over the support structure of the roof.
Figures 16 and 17. - Show representations similar to those of Figures 11, 12 and 13, corresponding to another alternative embodiment of the device, for fixing below a tile with a minimum curve radius and reduced height or on a corrugated roof sheet.
Figure 18. - Shows on a sloped roof another view in a side elevation of a series of collectors of the assembly in Figure 11, in line and mounted in position over the support structure of the roof.
Figure 19.- Shows, finally, a detail of two types of tiles to which this alternative embodiment of the invention is applicable.

### PREFERRED EMBODIMENT OF THE INVENTION

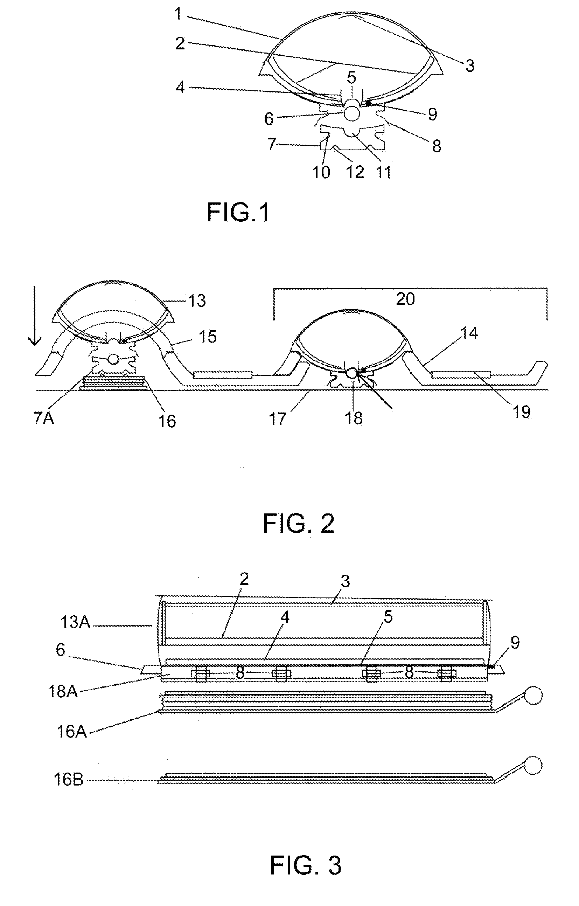

On looking at the figures described and in particular Figure 1, it can be seen that the device of the invention relates to use of an irregular and closed body (1), preferably of glass, or at least with its upper and external side transparent, smoked or tinted in which comprises four parabolic cylinders and in which particularly the upper side has the same curvature as the tile to which it is destined, as will be seen later on. This closed body (1), which has been vacuum filled, incorporates in the lower part two cylindrical parabolic reflectors (2) and, positioned in a focal line and situated above a radiation return cylindrical parabolic receiver (3) over laminates cylindrical parabolic funnel (4) concentrators, the radiation channelling being over a semi-cylindrical heat exchanger (5) coated with a selective absorbent and in which a fixing laminate in the interior side of the irregular tube provides the contact (9) for a classic temperature control probe.

Anchored on both sided of the lower faces of the irregular body (1) are situated spring clips (8) which are positioned to be easily and simply fastened or fixed by pressure into the plug holes foreseen for this purpose in a support cradle (7).

This support cradle (7) serves to position and hermetically fix a heat transfer tube (6) against an existing semi-cylindrical hole in the heat exchanger (5), relying for this purpose on the support cradle (7) with a cavity (11) also semi-cylindrical, which completes that which has just been mentioned, to tightly hold the heat transfer tube (6). The cradle support (7) is also provided with plug holes (10) on its side edges for the spring clips (8) fixed to the body (1), and lengthwise grooves on its base (12) to adjust a bellows lifting device (16) destined to be situated below the tiles (14) and which ensures that the heat transfer tube (6) remains perfectly fitted in its cavity (11).

In Figures 2 to 4 the vacuum filled irregular body, with it different accessories, has been referenced with (13) and is destined to be fastened to each tile (14) in an opening (15) effectively made in the same, as is seen particularly in Figure 2. The support cradle shown in Figure 2 with (7A) is aligned and positioned by the bellows lifting device now shown in (16), which supports over the roof (17), or the roof structure that is being used, the aforementioned bellows lifting device being retracted to position (16B), an optimum positioning of the heat transfer tube (6) having been made previously. In Figure 2 the assembly comprising the irregular body (13) enclosed in the tile (14) and the support cradle (7) with the tube (6) has been referenced with (20), forming a hermetically sealed group or assembly that has been referenced with (18).

When it is a mixed tile, as in the case of Figures 1 to 4 and 9, and depending on the width of the same, its flat and side part can be used to place many photovoltaic cells (19).

The device shown in a longitudinal section, as is represented in Figure 3, indicates the parabolic cylinder geometric shapes of the sides of the complete irregular tube (13A), hermetically fixed to the cradle support (18A) by the spring clips (8), keeping the heat transfer tube (6) lengthwise and hermetically fixed against the heat exchanger (5) in the cavity defined for this latter. The aligning and positioning lifting device is shown both in a theoretical locking position and in a release position, the first referenced with (16A) and the second with (16B) in Figure 3.

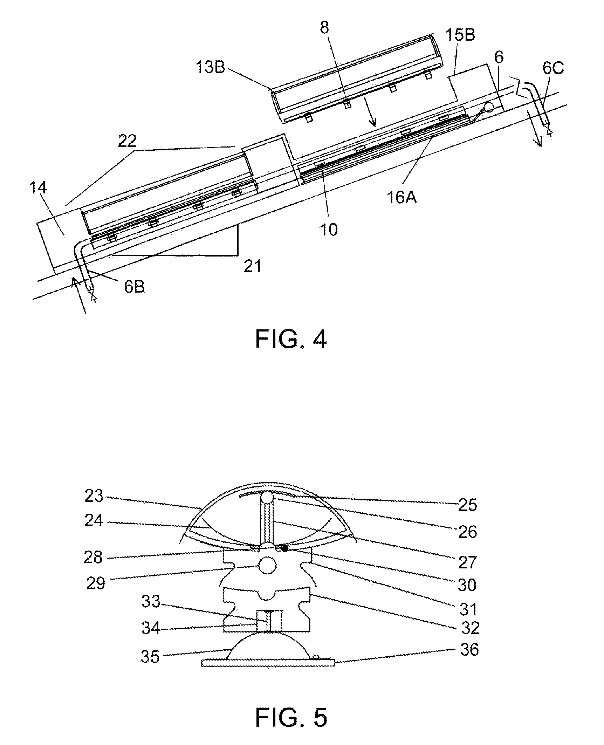

A way of carrying out the procedure appears in Figure 4, according to which, and in chronological order, a curved and schematised tile, referenced as a whole by (15B), incorporates an opening or window suitable for fitting a complete irregular body (13B) into it, and is positioned over the line symbolising the theoretical slope of a roof panel or roof (21). The lifting device (16A) is placed at a suitable level and remains locked to ensure that the spring clips (8) are fastened using pressure to the cradle support (7A) encircling the plug holes (10) of the same. The complete irregular body (13B) situated above the opening envisaged for this event (15B) is introduced into its housing, in such a way that manual pressure applied over the aforementioned irregular body (13B), according to the corresponding arrow of Figure (4) hermetically fastens it to the cradle support encircling the heat transfer tube. The lifting device previously set in the rest position (16B) is shifted below the following tile in a longitudinal line to allow another installation if required. In Figure 4 the reference (22) shows the previously finished assembly with the lifting device having been moved (16B). Operating in a loop, the heat transfer tube (6B) is placed below the tile (14) and, without connectors along the whole length required for the installation to provide a determined number of devices in a line, crossing below the roof again (See reference 6C), with the aim of being connected to a collector which feeds the domestic heating system, not represented in the figures.

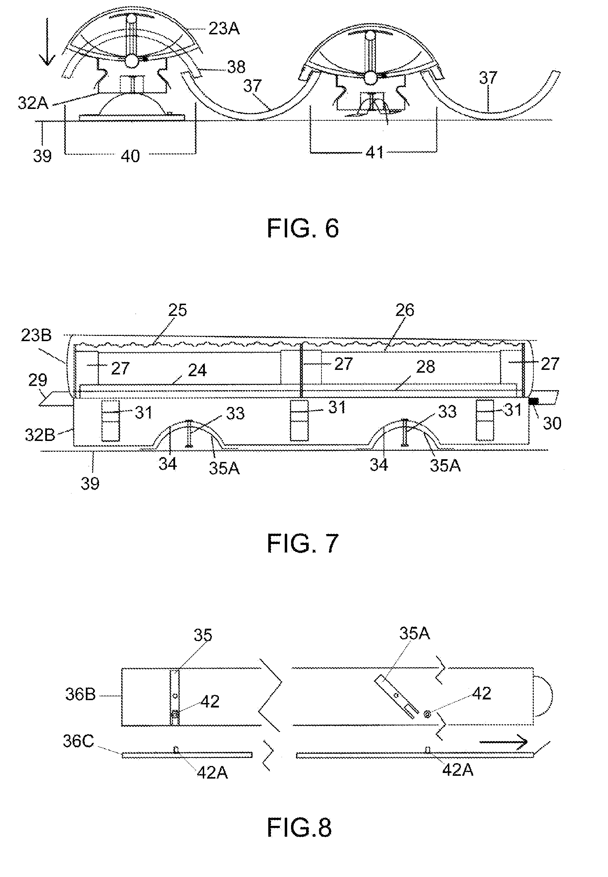

In the alternative embodiment of the device shown in Figure 5, the irregular body (23) is made under a more taut parabolic cylinder arch, to be able to fit into another curved tile model, that shown in Figure 6. In this alternative embodiment and taking into account the reduced internal space, the components are adapted to achieve the same purpose. In accordance with the invention two parabolic cylinder reflectors (24) are placed inside and in a lower position and, positioned on a focal line in a position above a corrugated fin (25) of a parabolic cylinder shape, coated with a selective absorbent. The fin is soldered to a concentrator tube containing a heat transfer (26). The absorbent finned tube (25-26) is fastened with heat transfer connectors (27), soldered onto a semi-cylindrical heat exchanger (28) so that a fastening clip in the side of the irregular body (23) offers the contact (30) for the heat control probe. Many spring clips (31) are fixed on both sides of the lower part of the irregular body (23), duly positioned to encircle the plug holes, provided for the purpose in the support cradle (32). The support cradle positions and hermetically fastens the heat transfer tube (29) in the semi-cylindrical hole (28) of the heat exchanger. The cradle support (32) is preferably made of the same material and a configuration similar to the support cradle (7), with similar plug holes for the spring clips and a cavity to house the heat transfer tube. In a variation, the support cradle (32) is provided with a cavity (34) to enclose the locking plate (35) around the axis (33) in a resting position (35 A), having been pushed into its cavity (34) by the positioning element (36).

In Figure 6 a section has been illustrated where the couplers are on a theoretical line of the sheet or base or roof (39), where the vacuum filled irregular body and all its elements appear referenced with (23A) and is positioned above the opening (38) made for the purpose in a tile of the type which appear in the aforementioned figure in an inverted position and referenced with (37). Reference (40) shows an assembly positioned with a cradle support (32A) fitted together by the pressure previously applied on the lock plate (35), while reference (41) shows the same assembly placed in the opening, the positioning element (36) having been extracted and the lock plate (35A) being turned and enclosed in the cavity (34), by the action of the positioning element (36) depending on its longitudinal displacement applied by the same as shown by the arrow in Figure 8. In this way the device integrated into a curved tile is mounted in a typical configuration of positioning curved tiles.

The parabolic cylindrical geometrical figures of the sides of the irregular body (now 23B) are shown in the longitudinal section in Figure 7, hermetically fixed to the cradle support (now 32B). The heat transfer tube (29) is hermetically and longitudinally enclosed in the cavity (28) of the heat exchanger. The lock plates (35A) are turned on the axis (33) in a resting position in the cavity (34) reserved for this purpose. The contact (30) remains accessible to connect the heat control probe to an automatic control device (not represented) by a connecting cable along the tube (29).

Putting into operation uses a special mechanical positioning means or tool (36), as shown in Figure 8 by means of a schematic plan and in a partial sectional view. In chronological and sequential order of putting the procedure in operation, using this special tool (now 36B and 36C) or mechanical means of positioning adapted to the lock plate (35) and the support cradle (32A), the aligning tool (36B) is placed below the support cradle (32 A) and positioned below the tile opening, the lock plate being in position (35) retained by a stop dowel (42), which enables the device to be invisibly fastened ensuring a simple connection of the system. The longitudinal section of this Figure 8 shows the mode (36D) and the dowel (42A) over the same section. Due to the freeing action shown by the arrow, the lock plate (35A) turns around the axis (33) to be positioned in its cavity (34) and be put in a resting position. The dowel (42) remains free and the positioning device (36) is withdrawn to carry out a new installation. If required, the device (13-23A) is withdrawn from the tile by means of simple traction by means of using a suction pad applied over the dome of the device, the spring clips (8) and (13) being less flexible than the lock plate (35).

In accordance with the structure described any expert in the art can adapt the positioning device for the working of the invention depending on the type of roof surface support, and depending on the existing tile, or to install the device model which will be used for this embodiment. Also, it has to be understood that the invention is not limited to the embodiment described and there many advantageous adaptations that can be added to these latter ones without being outside the limits of the present invention.

For example, it can be adapted to the configuration and geometric form of the device and reverse the illustrated internal and external elements to which they are connected, to make a device that incorporates a combination of two or more support tiles or fix in as series of support tiles adapting the shape and the length of the device of the invention, without being outside the limits of the invention.

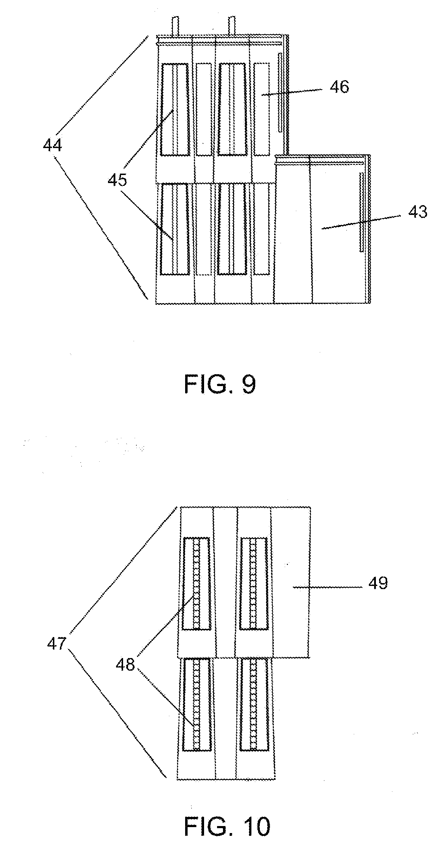

Figure 9 illustrates, according to a plan view, an example (44) of traditional mixed curved overlapping tiles in which the device (45) is incorporated and the positioning of the photovoltaic cells (46) in the flat part of the tiles, while the schematised reference (43) is side fastened between a normal tile and a modified tile. In Figure 10 the overlapping of four curved tiles has been referenced (47) in which the second device (48) is incorporated, that is to say the second practical embodiment of the invention, which corresponds to the geometric configuration of these types of tiles, where the reference (49) represents a tile in a gutter position.

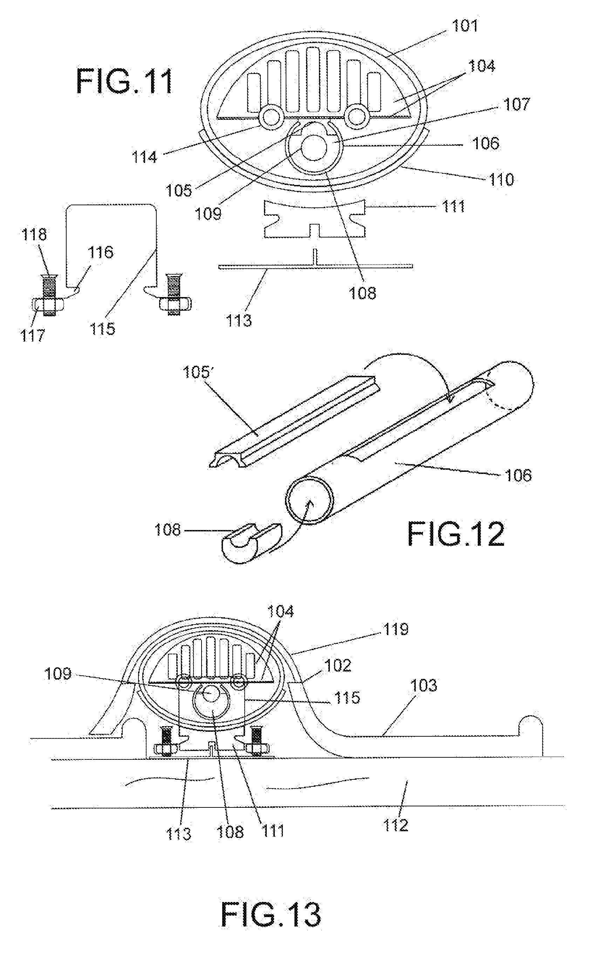

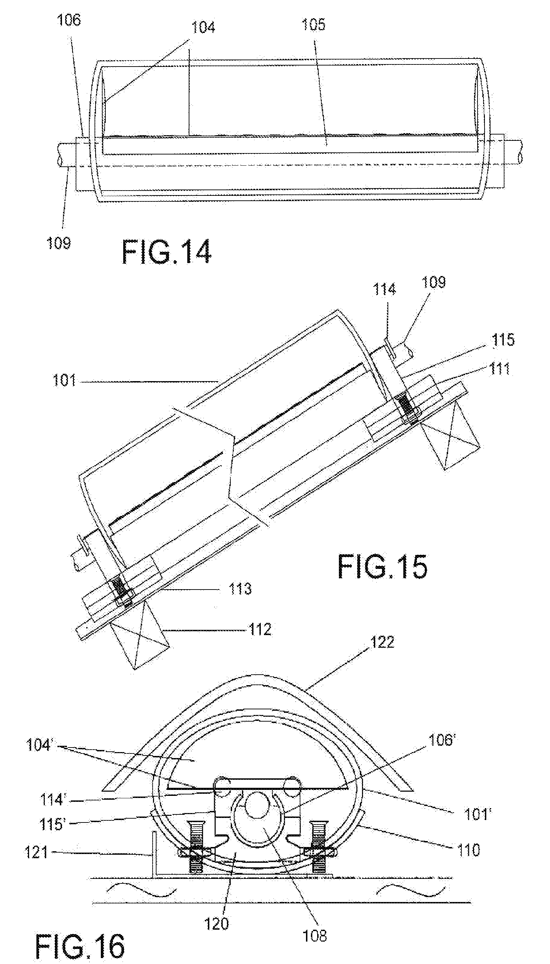

As explained previously, an alternative embodiment of the device appears in Figures 11 and 15, in which there is also a vacuum filled transparent and closed glass body (101) and a preferred elliptical section, inside which and affecting the upper half of the same, that which is going to be directly benefit by solar radiation through the opening (102) of the tile (103) in which has been placed, a shaped lamina (104) covered with a selective coating for absorbing heat, connected to a specific heat exchanger (105), preferably of copper, which is set in or soldered in the hole suitable for the glass tube (106), this same being soldered onto both external faces of the collector it passes through, thus constituting an internal heat transfer chamber (107), hermetically sealed at its ends by an aligning cradle (108) fitting of the heat transfer tube (109) to the heat exchanger (105).

The hermetic body (101) in its lower parabolic cylindrical side is covered by a laminate (110) based on a compound, including a radiation reflector to return the rays and an isolating felt to prevent heat losses, this assembly being supported and aligned on a support cradle (111), this latter seated on a cross-section (113) with levelling, aligning and support functions of the hermetic tube (101).

The fixing of these elements is carried out using a pair of supports (114) which protrude from the ends of the hermetic body (101) and over which it is destined to support a spring clip (115) with elastic binding, configured in a "U" shape (116),to be fitted into the lateral grooves of the support cradle (111), and with fixing bolts (117) that, along with the screws (118), to enable to regulate or adjust the height of the assembly, as is particularly observed in Figure 13.

As is also inferred from looking at Figure 13, with the described structure the collector itself is physically independent of the tile (103), in such a way that it is nor affected by any type of irregularity there could be in this latter, even enabling it to be used with different types of tiles that have the opening (102), which is closed using a transparent dome (119), which provides the tile with the due water tightness.

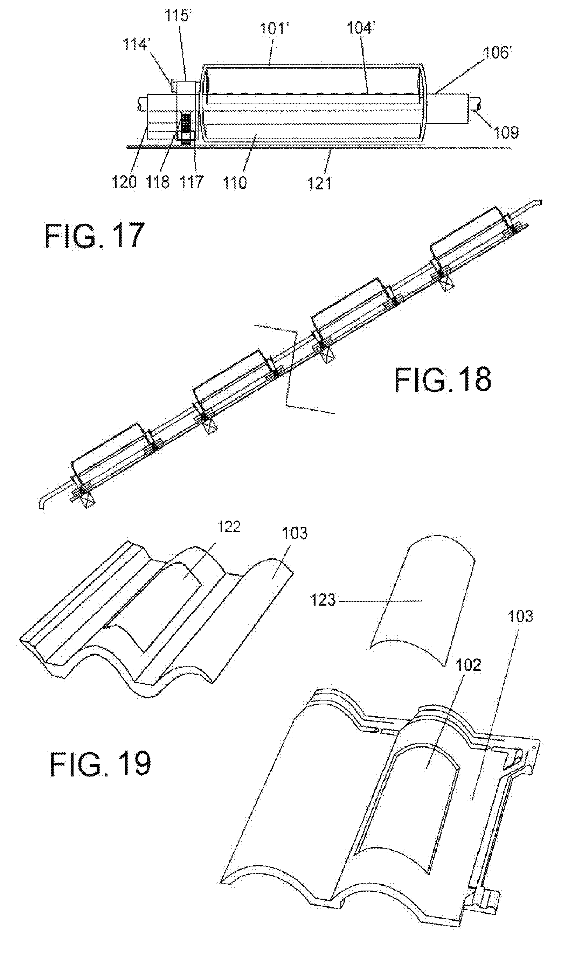

In accordance with the alternative embodiment of Figures 16 and 17, in which the basic structural characteristics described are maintained, the shaped heat absorbent laminates (104') can adopt a different position in the hermetic body, and the different configuration of the supports (114') for the spring clips (115'), reduced in size to fasten to the support cradles (120) configured to be adapted to the glass tube (106') which passes through the hermetic body (101') as observed in Figures 16 and 17, in turn being passed through by the heat transfer fluid circulation tube (109), hermetically sealed and aligned at its ends by the cradles (108), this mounted assembly being supported by a support frame (121) which has the function of aligning and adjusting to install it under tiles (103) of a particular size or reduced curvature with a dome of different shapes (122) or for corrugated roof panels.

As explained previously, in this embodiment and apart from the modifications just mentioned, it keeps the same structure as in the embodiment of Figures 11 to 15.

## Claims

1. A solar energy collection device applicable to existing or by making tiled roofs, **characterised** because starting from a wide opening (15 - 102), made in tiles, whether it is mixed, flat-curved tiles (14-103), or it is curved tiles (37), materialises in an irregular body hole (1-23-101), closed hermetically, of transparent, tinted or smoked glass and vacuum filled, reliable and dimensionally adequate to be tightly fastened to the opening (15-102) of the tile, aforementioned body being complemented with a heat transfer tube (6-29-109), with a heat exchanger (5-28-105) coated with a selective absorbent, and which receives heat from reflectors or other means of heat capture (2-24-104-104'), this assembly being able to be fastened to a support cradle (7-32-111), destined to rest on the wooden battens or concrete base which constitute the base for the tile to sit.

2. A solar energy collection device able to be fastened to tiled roofs, according to the claim 1, **characterised** because the means of energy capture are parabolic cylinder reflectors (2-24) which in conjunction with a parabolic cylinder (3) situated on a focal line, act on a funnel element made up of two opposite parabolic cylinder sheets (4) that ensure the concentration parameter, the heat exchanger (5-28) being situated below aforementioned funnel (4), with a semi-cylindrical configuration, coated with a selective absorbent and which ensures the hermetic closing of the heat transfer tube (6-29), situated outside the body hole (1-23), a body which contains on its base some spring clips (8-31) for fixing to the support cradle (7-32), which is placed over an adapted aligning lifting device (16) destined to apply the necessary pressure to hermetically assemble the assembly (20), to thus as a contact for a thermal probe (9-30).

3. A solar energy collection device able to be fastened to tiled roofs, according to claims 1 and 2, **characterised** because it also incorporates a corrugated fin (25), with a parabolic-cylindrical configuration, coated with a selective absorbent, fixed by soldering to a concentrator tube (26) which incorporates a heat transfer material, as well as connectors (27) fastened to the aforementioned concentrator tube (26) and which ensures the transfer of thermal energy to the heat exchanger (28).

4. A solar energy collection device able to be fastened to tiled roofs, according to claims 1 and 3, **characterised** because the support cradle (7) is made of a solid and suitable material to ensure the thermal isolation of the heat transfer tube (6-29), and includes plug holes on the sides (10) to receive spring clips (8-31) and a cavity (11) to enclose the heat transfer tube (6-29), as well as lower longitudinal grooves (12) to be positioned with the bellows lifting device (16).

5. A solar energy collection device able to be fastened to tiled roofs, according to claims 1 and 4, **characterised** because it incorporates a support cradle (32) provided with lock plates (35), which turn around an axis (33) to be placed in a resting position in a cavity (34) of aforementioned support cradle (32).

6. A solar energy collection device able to be fastened to tiled roofs, according to claim 1, **characterised** because the hermetically closed and transparent body (101-101'), which is vacuum filled and adopts a preferably elliptical section, is physically independent from the tile (103), while the opening (102) of the tile is closed watertight through a transparent dome (119-123) conveniently fixed to the same and also physically independent from the water tight body (101-101').

7. A solar energy collection device able to be fastened to tiled roofs, according to claim 6, **characterised** because the interior of the watertight body (101-101'), instead of parabolic cylinder reflectors, or as a complement to the same, a shaped lamina (104-104') covered with a selective coating for absorbing heat is situated, with which is supports a heat exchanger (105-105') for heat transfer to the tube (109) through which the heat transfer fluid circulates.

8. A solar energy collection device able to be fastened to tiled roofs, according to claims 6 and 7, **characterised** because inside the hermetic body (101) a glass tube (106-106') crosses from one end to the other in which the heat exchanger (105-105') is supported lengthwise to enclose the heat transfer fluid circulation tube (109), locked and sealed at its ends by means of a cradle (108).

9. A solar energy collection device able to be fastened to tiled roofs, according to claims 6 and 7, **characterised** because the heat exchanger (105') in the internal space of the hermetic and vacuum filled tube (101) is fixed lengthwise in the hole of the glass tube (106-106'), housing the heat transfer tube (109) positioned and sealed at its ends by means of a cradle (108).

10. A solar energy collection device able to be fastened to tiled roofs, according to claims 6 and 9, **characterised** because the watertight body (101-101') is provided with a sheet (110) based on a reflecting and heat isolating compound in its lower half.

11. A solar energy collection device able to be fastened to tiled roofs, according to claims 6 and 10, **characterised** because the cradle (120) is fastened as a support to the glass tube (106-106') which passes through the hermetic body (101-101').

12. A solar energy collection device able to be fastened to tiled roofs, according to claims 6 and 11, **characterised** because the cradle (111) over which in turn rests the watertight body (101- 101'), supports a support shape (113-121) acting as a means of aligning and adjusting the hermetic body (101) which in turn supports it over wood battens or a concrete base (112) which is the seating for the tile (103).

13. A solar energy collection device able to be fastened to tiled roofs, according to claims 6 and 12, **characterised** because from the ends of the watertight body (101-101') pairs of support tracks (114) emerge at mid-level for the respective spring clips (115) in an inverted "U" configuration, whose middle section rests over the aforementioned supports and whose side sections have nuts (117) and bolts (118) at their ends to regulate the height of the device, to fit the support cradle to the hermetic body.

14. A procedure for mounting the device of claims 1, 2, 3 and 4, **characterised** because over the roof (17-39) or any other support surface of the roof, after the aligned positioning of the tiles (14-37), the special means or tool (36) or bellows lifting device (16) is introduced below these and in accordance with the opening or window (15) thus positioning and aligning the heat transfer tube (6-29) and the support cradles (7-32), thus ensuring the resistance to manual pressure applied over the dome of the collection device (1-23) thus locking the spring clips (8-31) on the plug holes (10) of the support cradle (7-32) and thus configuring the closely fastened devices (20-41) after having retracted or withdrawn the special means (16-36).
